# EUROPÄISCHE PATENTSCHRIFT

(11) **EP 0 981 287 B1**
(45) Veröffentlichungstag und Bekanntmachung des Hinweises auf die Patenterteilung: **24.09.2003**
(21) Anmeldenummer: 98966888.4
(22) Anmeldetag: 21.12.1998
(51) Int. Cl.: A45C 3/00, A45C 5/02

(54) **TASCHE ODER BEHÄLTER**
POCKET OR CONTAINER
POCHE OU CONTENANT

(30) Priorität: 22.12.1997 DE 29722646 U
(43) Veröffentlichungstag der Anmeldung: 01.03.2000
(73) Patentinhaber: ORTLIEB, Hartmut, 91560 Heilsbronn (DE)
(72) Erfinder: ORTLIEB, Hartmut, 91560 Heilsbronn (DE)
(74) Vertreter: Schuhmann, Albrecht
(86) Internationale Anmeldenummer: DE9803737
(87) Internationale Veröffentlichungsnummer: WO99032008

(56) Entgegenhaltungen:
- EP-A- 0 192 908
- EP-A- 0 396 183
- DE-A- 1 610 751
- FR-A- 1 591 785
- FR-A- 2 114 262
- FR-A- 2 341 687
- US-A- 3 168 749
- US-A- 5 132 163

## Beschreibung

Die Erfindung betrifft eine Tasche oder einen Behälter mit den Merkmalen des Oberbegriffs des Anspruchs 1.

Bekannt sind Taschen aus miteinander randseitig verschweißten Zuschnitten aus beschichtetem Gewebe, die je nach Anwendung wasserdicht ausgeführt sind. Bisher wurde bei diesen Taschen im wesentlichen nur Beschichtung auf Beschichtung geschweißt. Diese Beschichtungen mußten in Ihrer Kombination eine sinnvolle Mindestschichtstärke und Haftung zum Gewebe haben, um eine hochwertige Verbindung zu erzielen. Da die Zuschnitte komplett beschichtet wurden, ergaben sich Nachteile hinsichtlich ihrer Flexibilität, ihres Gewichtes und der Kosten. Möglich war es auch, Gewebeteile mit Beschichtungs- und Gewebeseite zu verkleben oder zu verbinden. Nachteil ist hier sehr oft die schlechte Klebehaftung und die Undichtigkeit der Tasche, auf Grund der Kapillarwirkung des nicht beschichteten Gewebes.

Aufgabe der vorliegenden Erfindung ist es, eine Tasche oder einen Behälter zu schaffen, die sich durch hohe Dichtigkeit und Stabilität im Verbindungsbereich der Zuschnitte auszeichnet, die kostengünstig herstellbar ist und insbesondere verbesserte Möglich keiten der Herstellung dreidimensionaler Taschenkörper aus verschweißten Zuschnitten bietet.

Diese Aufgabe wird mit den Merkmalen des kennzeichnenden Teils des Anspruchs 1 gelöst. Fortentwicklungen und vorteilhafte Ausgestaltungen der Erfindung sind in den weiteren Ansprüchen enthalten.

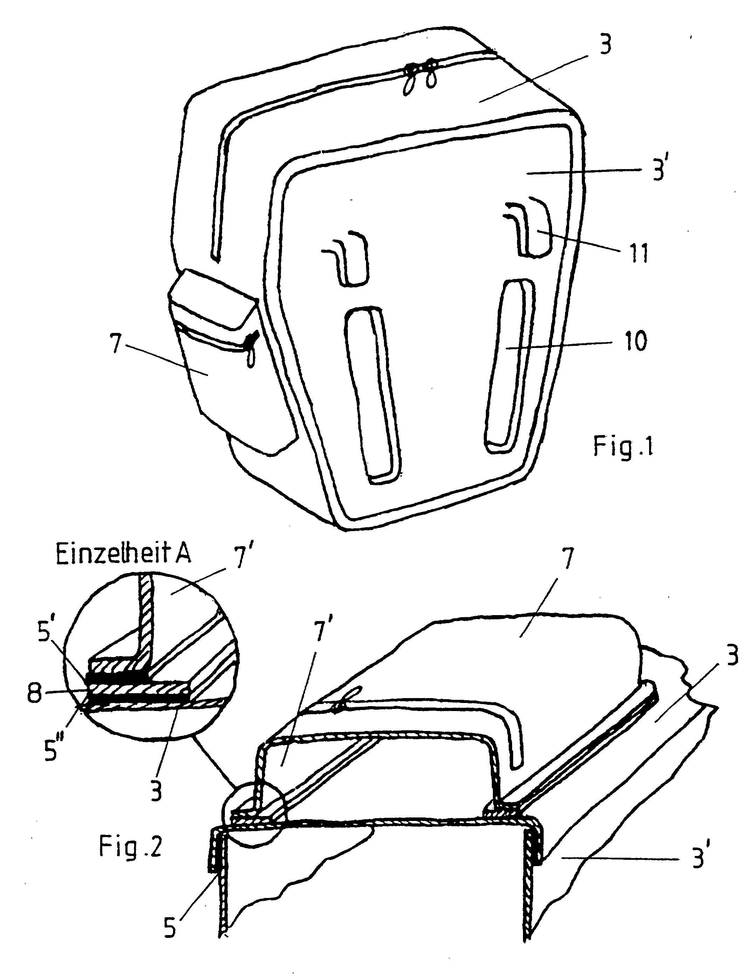

Erfindungsgemäß ist eine Tasche oder ein Behälter aus einem flexiblen, biegesteifen oder steifem Material wie Gewebe, Vliesstoff, Folie, Leder, Kunststoffformteilen, Kunststoffprofilen oder einer Kombination dieser Materialien, wobei die Tasche oder der Behälters aus wenigstens zwei Zuschnitten wenigstens eines dieser Materialien gebildet wird,
wobei wenigstens ein Zuschnitt 3, 3', 3", 7', 13, 13', 23, 23', 33, 33' randseitig wenigstens teilweise eine streifenförmige Beschichtung 5, 5', 15, 15', 25, 25', 35 aufweist und wobei die Zuschnitte unmittelbar miteinander oder indirekt über weitere Materialteile und Beschichtungen mittels dieser Beschichtung, bzw. Beschichtungen verklebt oder verschweißt sind,
dadurch gekennzeichnet,
daß wenigstens ein Zuschnitt 7' neben der Beschichtung winklig zu einem anderen Zuschnitt ausgerichtet ist (Fig.2, Einzeiheit A).

Die Zuschnitte 3', 3", 13, 13' können randseitig überlappend oder mit einer Schälnaht verklebt oder verschweißt sein, (Fig.3) wobei die Naht einen Keder 14, 14' aufweisen kann, der Keder streifenförmig mit einer Beschichtung für das Verkleben oder Verschweißen versehen sein kann (Fig.4, 6)

Nach einer besonders vorteilhaften Ausführung der Erfindung sind wenigstens drei Zuschnitte oder Materialteile mit dazwischen angeordneten Beschichtungen randseitig miteinander verklebt oder verschweißt, wobei die Beschichtungen nicht deckungsgleich zueinander angeordnet sind. Insbesondere können die Zuschnitte randseitig parallel zueinander angeordnet sein, wobei die Beschichtungen streifenförmig aufgebracht sind und wenigstens teilweise eine unterschiedliche Breite aufweisen. Mit dieser Ausführungsform ist es beispielsweise möglich, durch einen breiten Streifen Beschichtung einen Zuschnitt mit geringer Haftung für diese, wie zum Beispiel Gewebe, mit einer Zwischenlage zu verschweißen, die eine hohe Haftung zu der Beschichtung aufweist, wobei dann ein weiterer Zuschnitt mit einer hohen Haftung randseitig mit einem dünneren Beschichtungsstreifen auf die Zwischenlage geschweißt wird. Das Verschweißen der beiden Beschichtungsstreifen mit den Zuschnitten und der Zwischenlage kann in einem Arbeitsgang erfolgen.

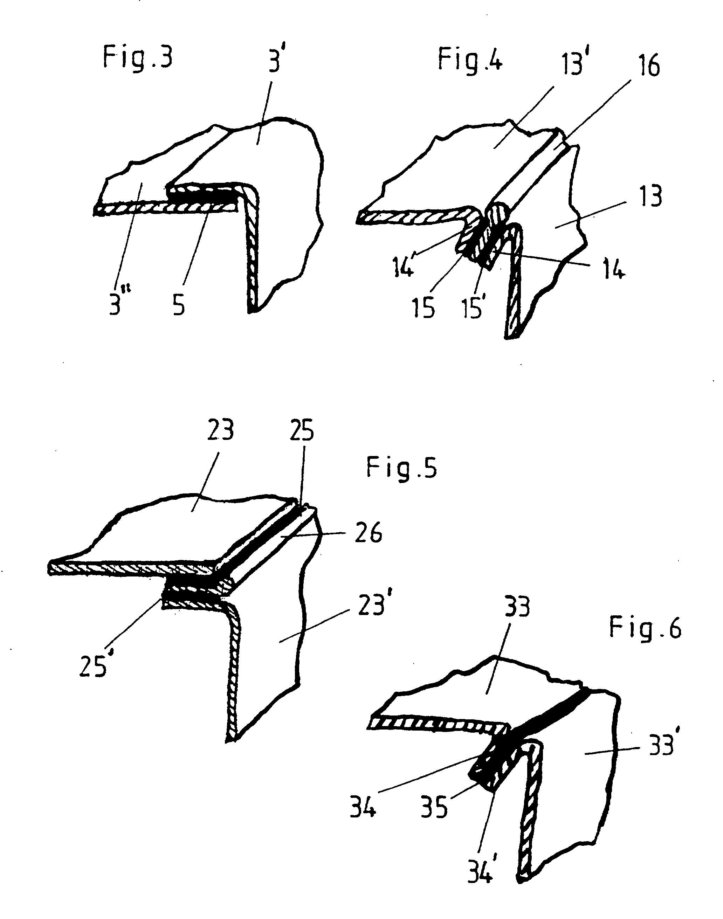

Nach einer weiteren vorteilhaften Ausführung der Erfindung ist zwischen wenigstens zwei Zuschnitten 23, 23', deren Rändern oder deren Naht ein Materialteil wie ein Kunststoffformteil, ein Kunststoffprofil 26 oder dergleichen angeordnet, wobei dieses Materialteil beidseitig durch Beschichtungen mit den Zuschnitten, deren Rändern oder deren Naht verklebt oder verschweißt ist (Fig.5)

Nach einer Ausführungsform der Erfindung wird der Kleber oder die Beschichtung vorher mindestens auf einen Zuschnitt aufgetragen und der Kleber oder die Beschichtung wird beim Fügeprozeß thermisch oder mit Hochfrequenz aktiviert oder reaktiviert, wobei vorzugsweise der Kleber oder die Beschichtung ein Reaktiv-Hotmelt ist.

Die Tasche oder der Behälter ist vorzugsweise wasserdicht ausgeführt oder mit einer wasserdichten Beschichtung versehen, wobei die Tasche oder der Behälter und die Beschichtung aus einem gleichartigen Material, beispielsweise Polyester, einem Polyester-Copolymer, Polypropylen oder einem Polypropylen-Copolymer bestehen können.

An dem Material der Tasche oder des Behälters können Funktionsmittel wie Rippen, Schlaufen, Haken oder dergleichen angeformt sein.

Gegenstand der Erfindung ist demnach eine Tasche oder ein flexibler Behälter, zusammengesetzt aus mehreren Zuschnittteilen, bei denen eine vorher aufgetragene streifenförmige Beschichtung der zu fügenden Materialteile vorzugsweise im Randbereich aufgetragen wurde. Diese Streifenbeschichtung besteht vorzugsweise aus neuartigen Hotmelts mit enormen Haftwerten und Klebeeigenschaften. Vorzugsweise wird diese Technik bei 3-dimensionalen Taschen in aufwendiger Überlapp- und Umbugschweißtechnik eingesetzt. Dies geschieht vorzugsweise durch Reaktivieren des trockenen Klebers während des Füge und Umbugvorgangs.
Jetzt können Materialien miteinander verbunden werden, die besonders leicht sind. Jetzt bestimmt der Einsatzzweck der Tasche und nicht die Fügetechnik das Gewicht des Produktes. Es können in vielen Fällen ausschließlich einseitig beschichtete Gewebe und neuartige Materialkombinationen verwendet werden. Zudem verringert sich die Einschränkung der mechanischen Eigenschaften des Gewebes durch den Wegfall nicht für den Einsatz notwendiger Beschichtungen. Weiterhin erhöht sich die oft gewünschte Flexibilität der Produkte durch einseitige und weniger schwere Gewebebeschichtungen. Die Optik des Produkts verbessert sich wesentlich, da am Markt meist Gewebelook und nicht Folientouch gewünscht ist. Dies ist mit dieser Technik nun an der ganzen Außenseite ohne Leichtbeschichtungen möglich.
Durch die Verringerung der Materialstärken verringert sich auch der Einstandspreis der für eine Tasche benötigten Materialien.
Jetzt ist es möglich, daß die Gewebebeschichtung nicht mehr für den Fügeprozeß aufgeschmolzen werden muß, sondern nur die leicht schmelzende und thermisch oder mit Hochfrequenz leicht zu reaktivierende Streifenbeschichtung die Verklebung erzielt. Demzufolge kann, wie das Gewebe, so auch die Beschichtung aus einem thermisch stabilen und durch Hochfrequenz nicht zu aktivierenden Material bestehen. Deswegen können die Gewebe und Gewebebeschichtung jetzt für derartige Taschen gleichartig sein, mit dem Vorteil, daß das Material nunmehr problemlos recyclebar ist.

Als vorteilhaft hat sich erwiesen, zwei Zuschnitteile, die im wesentlichen parallel zueinander ausgerichtet sind, über ein gemeinsames Umschlagteil miteinander zu verbinden, wobei das Umschlagteil jeweils randseitig mit den Zuschnitten verschweißt wird und sich die dafü vorgesehenen Beschichtungsstreifen parallel zueinander entwickeln. Auf diese Weise können offene und geschlossene dreidimensionale Taschenkörper hergestellt werden. Erfindungsgemäß sind die Zuschnitte auch winklig ausgerichtet, wobei sich aber an der Parallelausrichtung der Beschichtungsstreifen nichts ändert.

## Patentansprüche

1. Tasche oder Behälter aus einem biegesteifen oder steifen Material wie Gewebe, Vliesstoff, Folie, Leder, Kunststoffformteile, Kunststoffprofile oder einer Kombination dieser Materialien, wobei die Tasche oder der Behälter aus wenigstens zwei Zuschnitten wenigstens eines dieser Materialien gebildet wird,
wobei ein Zuschnitt (3, 3', 3", 7', 13, 13', 23, 23', 33, 33') randseitig wenigstens eine streifenförmige Beschichtung (5, 5', 15, 15', 25, 25', 35) aufweist und wobei die Zuschnitte unmittelbar miteinander oder indirekt über weitere Materialteile (8, 16, 26) und Beschichtungen mittels dieser Beschichtung verschweißt sind,
**dadurch gekennzeichnet,**
**daß** wenigstens ein Zuschnitt (7') neben der Beschichtung winklig zu einem anderen Zuschnitt (3) ausgerichtet ist.

2. Tasche oder Behälter nach Anspruch 1,
**dadurch gekennzeichnet,**
**daß** die Zuschnitte randseitig überlappend verklebt oder verschweißt sind.

3. Tasche oder Behälter nach Anspruch 1 oder 2,
**dadurch gekennzeichnet,**
**daß** die Zuschnitte mit einer Schälnaht verschweißt sind.

4. Tasche oder Behälter nach Anspruch 2 oder 3,
**dadurch gekennzeichnet,**
**daß** die Naht einen Keder aufweist.

5. Tasche oder Behälter nach Anspruch 4,
**dadurch gekennzeichnet,**
**daß** der Keder streifenförmig mit einer Beschichtung versehen ist.

6. Tasche oder Behälter nach Anspruch 1,
**dadurch gekennzeichnet,**
**daß** wenigstens drei Zuschnitte oder Materialteile mit dazwischen angeordneten Beschichtungen randseitig miteinander verklebt oder verschweißt sind,
wobei die Beschichtungen nicht deckungsgleich zueinander angeordnet sind.

7. Tasche oder Behälter nach Anspruch 6,
**dadurch gekennzeichnet,**
**daß** die Zuschnitte randseitig parollel zueinander angeordnet sind,
**daß** die Beschichtungen streifenförmig aufgebracht sind,
und **daß** die Beschichtungen wenigstens teilweise eine unterschiedliche Breite aufweisen.

8. Behälter oder Tasche nach einem der vorhergehenden Ansprüche,
**dadurch gekennzeichnet,**
**daß** zwischen wenigstens zwei Zuschnitten, deren Rändern oder deren Naht ein Materialteil wie ein Kunststoffformteil, ein Kunststoffprofil oder dergleichen angeordnet ist,
wobei dieses Materialteil beidseitig durch Beschichtungen mit den Zuschnitten, deren Rändern oder deren Naht verklebt oder verschweißt ist.

9. Tasche oder Behälter nach einem der vorhergehenden Ansprüche,
**dadurch gekennzeichnet,**
**daß** die Beschichtung vorher mindestens auf einen Zuschnitt aufgetragen wird und der Kleber oder die Beschichtung beim Fügeprozeß thermisch oder mit Hochfrequenz aktiviert oder reaktiviert wird.

10. Tasche oder Behälter nach einem der vorhergehenden Ansprüche,
**dadurch gekennzeichnet,**
**daß** die Beschichtung oder der Kleber ein Hotmelt ist.

11. Tasche oder Behälter nach Anspruch 10.
**dadurch gekennzeichnet,**
**daß** die Beschichtung oder der Kleber ein Reaktiv-Hotmelt ist.

12. Tasche oder Behälter nach einem der vorhergehenden Ansprüche,
**dadurch gekennzeichnet,**
**daß** die Tasche oder der Behälter wasserdicht ausgeführt ist oder mit einer wasserdichten Beschichtung versehen ist.

13. Tasche oder Behälter nach Anspruch 12,
**dadurch gekennzeichnet,**
**daß** die Tasche oder der Behälter und die Beschichtung aus einem gleichartigen Material bestehen.

14. Tasche oder Behälter nach Anspruch 13,
**dadurch gekennzeichnet,**
**daß** das Material Polyester oder ein Polyester-Copolymer ist.

15. Tasche oder Behälter nach Anspruch 13,
**dadurch gekennzeichnet,**
**daß** das Material Polypropylen oder ein Polypropylen-Copolymer ist.

16. Tasche oder Behälter nach einem der vorhergehenden Ansprüche,
**dadurch gekennzeichnet,**
**daß** an dem Material der Tasche oder des Behälters Funktionsmittel wie Rippen, Schlaufen, Haken oder dergleichen angeformt sind.

## Claims

1. Pocket or container made of a flexurally rigid or stiff material such as woven or nonwoven fabric, sheeting, leather, plastic mouldings, plastic profiles or a combination of these materials, the pocket or the container being formed by at least two blanks of at least one of these materials, one blank (3, 3', 3'', 7', 13, 13', 23, 23', 33, 33') having at the edge at least one coating in strip form (5, 5', 15, 15', 25, 25', 35) and the blanks being fused directly to one another or indirectly via further material parts (8, 16, 26) and coatings by means of this coating, **characterized in that** at least one blank (7') is aligned next to the coating at an angle in relation to another blank (3).

2. Pocket or container according to Claim 1, **characterized in that** the blanks are adhesively bonded or fused at the edge in an overlapping manner.

3. Pocket or container according to Claim 1 or 2, **characterized in that** the blanks are fused with a peel seam.

4. Pocket or container according to Claim 2 or 3, **characterized in that** the seam has piping.

5. Pocket or container according to Claim 4, **characterized in that** the piping is provided with a coating in strip form.

6. Pocket or container according to Claim 1, **characterized in that** at least three blanks or material parts are adhesively bonded or fused to one another at the edge with coatings arranged in between, the coatings not being arranged congruently in relation to one another.

7. Pocket or container according to Claim 6, **characterized in that** the blanks are arranged parallel to one another at the edge, **in that** the coatings are applied in strip form and **in that** the coatings are at least partially of different widths.

8. Pocket or container according to one of the preceding claims, **characterized in that** a material part such as a plastic moulding, plastic profile or the like is arranged between at least two blanks, their edges or the seam, this material part being adhesively bonded or fused to the blanks, their edges or the seam on both sides by coatings.

9. Pocket or container according to one of the preceding claims, **characterized in that** the coating is applied in advance to at least one blank and the adhesive or the coating is activated or reactivated thermally or by high frequency during the joining process.

10. Pocket or container according to one of the preceding claims, **characterized in that** the coating or the adhesive is a hot melt.

11. Pocket or container according to Claim 10, **characterized in that** the coating or the adhesive is a reactive hot melt.

12. Pocket or container according to one of the preceding claims, **characterized in that** the pocket or the container is made waterproof or is provided with a waterproof coating.

13. Pocket or container according to Claim 12, **characterized in that** the pocket or the container and the coating consist of material of the same type.

14. Pocket or container according to Claim 13, **characterized in that** the material is polyester or a polyester copolymer.

15. Pocket or container according to Claim 13, **characterized in that** the material is polypropylene or a polypropylene copolymer.

16. Pocket or container according to one of the preceding claims, **characterized in that** functional means such as ribs, loops, hooks or the like are moulded onto the material of the pocket or the container.

## Revendications

1. Poche ou conteneur constitué d'un matériau rigide ou résistant à la flexion tel qu'une toile, une étoffe nappée, une feuille de métal, du cuir, des pièces moulées en matière plastique, des profilés en matière plastique ou une combinaison de ces matériaux, la poche ou le conteneur étant formé d'au moins deux pièces découpées constituées d'au moins un de ces matériaux,
une pièce découpée (3, 3', 3", 7', 13, 13', 23, 23', 33, 33') comportant en bordure au moins un enduit en forme de bande (5, 5', 15, 15', 25, 25', 35) et les pièces découpées étant soudées au moyen de cet enduit directement entre elles ou indirectement via d'autres pièces de matériau (8, 16, 26) et d'autres enduits,
**caractérisé en ce qu'**
- au moins une pièce découpée (7') est orientée près de l'enduit angulairement par rapport à une autre pièce découpée (3).

2. Poche ou conteneur selon la revendication 1, **caractérisé en ce que** les pièces découpées sont collées ou soudées à recouvrement en bordure.

3. Poche ou conteneur selon la revendication 1 ou 2, **caractérisé en ce que** les pièces découpées sont soudées au moyen d'un joint déroulé.

4. Poche ou conteneur selon la revendication 2 ou 3, **caractérisé en ce que** le joint comporte un bourrelet.

5. Poche ou conteneur selon la revendication 4, **caractérisé en ce que** le bourrelet est en forme de bande et est doté d'un enduit.

6. Poche ou conteneur selon la revendication 1, **caractérisé en ce que** au moins trois pièces découpées ou pièces de matériau, entre lesquelles sont prévus des enduits, sont collées ou soudées entre elles en bordure, les enduits n'étant pas agencés de façon identique.

7. Poche ou conteneur selon la revendication 6, **caractérisé en ce que** les pièces découpées sont agencées en bordure parallèlement entre elles, et **en ce que** les enduits sont au moins partiellement de largeurs différentes.

8. Poche ou conteneur selon l'une des revendications précédentes, **caractérisé en ce qu'**une pièce de matériau, une pièce moulée en matière plastique, un profilé en matière plastique ou analogue est agencé entre au moins deux pièces découpées, leurs bords ou leurs joint,
cette pièce de matériau étant collée ou soudée des deux côtés aux pièces découpées, à leurs bords ou bien à leur joint au moyen des enduits.

9. Poche ou conteneur selon l'une des revendications précédentes, **caractérisé en ce que** le revêtement est appliqué auparavant au moins sur une pièce découpée et la colle ou l'enduit est activé ou réactivé thermiquement ou avec des ondes à haute fréquence lors du processus de jonction.

10. Poche ou conteneur selon l'une des revendications précédentes, **caractérisé en ce que** l'enduit ou la colle est une matière thermofusible.

11. Poche ou conteneur selon la revendication 10, **caractérisé en ce que** l'enduit ou la colle est une matière thermofusible réactive.

12. Poche ou conteneur selon l'une des revendications précédentes, **caractérisé en ce que** la poche ou le conteneur est réalisé de façon à être étanche à l'eau ou bien est doté d'un enduit étanche à l'eau.

13. Poche ou conteneur selon la revendication 12, **caractérisé en ce que** la poche ou le conteneur et le revêtement sont constitués d'un matériau analogue.

14. Poche ou conteneur selon la revendication 13, **caractérisé en ce que** le matériau est du polyester ou un copolymère d'ester.

15. Poche ou conteneur selon la revendication 13, **caractérisé en ce que** le matériau est du polypropylène ou un copolymère du propylène.

16. Poche ou conteneur selon l'une des revendications précédentes, **caractérisé en ce que** des moyens fonctionnels tels que des nervures, des boucles, des crochets ou analogues sont conformés sur le matériau de la poche ou du conteneur.
